# EUROPÄISCHE PATENTANMELDUNG

(11) **EP 0 840 418 A1**
(43) Veröffentlichungstag der Anmeldung: **06.05.1998**
(21) Anmeldenummer: 97203342.7
(22) Anmeldetag: 29.10.1997
(51) Int. Cl.: H02G 3/12

(54) **Kombination einer Einbaudose und elektrischen Installationsmaterial, und Einbaudose für Benützung in einer solchen Kombination**

(30) Priorität: 30.10.1996 NL 1004392
(71) Anmelder: B.V. Kunststoffenindustrie Attema, NL-4203 NN Gorinchem (NL)
(72) Erfinder: de Hoog, Antonie, 4213 DE Dalem (NL)
(74) Vertreter: Mertens, Hans Victor

(57) **Zusammenfassung**

Eine Einbaudose für elektrisches Installationsmaterial umfaßt einen Boden sowie eine oder mehrere Seitenwände und Verbindungselemente zur Befestigung des Installationsmaterials in der Dose. Die Verbindungselemente sind in einer parallel zum Boden verlaufenden Ebene entlang einer Linie in einem spitzen oder rechten Winkel zur zugehörigen Seitenwand bewegbar. Die Verbindungselemente können auch so ausgelegt sein, daß sie in einer parallel zum Boden verlaufenden Ebene an verschiedenen Stellen entlang einer Linie in einem spitzen oder rechten Winkel zur zugehörigen Seitenwand Verbindungselemente vom Installationsmaterial aufnehmen. Das Installationsmaterial umfaßt einen Rahmen mit einem Anzahl von Schlitzen. Die Schlitze sind in einem Winkel zur vorgenannten Linie gerichtet.

## Beschreibung

Die Erfindung bezieht sich auf eine Kombination von elektrisches Installationsmaterial, mit einem Rahmen mit einer Anzahl von Schlitzen; und eine Einbaudose für elektrisches Installationsmaterial, mit einem Boden und einer oder mehreren Seitenwänden sowie eine Anzahl von jeweils nahe einer der Seitenwände montierter Verbindungselemente zur Befestigung des Installationsmaterials in der Dose, wobei die Verbindungselemente so ausgelegt sind daß sie im wesentlichen komplementär geformte Verbindungselemente vom Installationsmaterial durch die Schlitze verbinden können.

Beim Anbringen einer im wesentlichen zylinderförmigen, rechteckigen oder andersförmigen Einbaudose in einem Loch einer Wand kann die Dose im Loch infolge von Ungenauigkeiten beim Bohren oder Fräsen des Loches, Ungenauigkeiten beim Einbringen der Dose in das Loch und Ungenauigkeiten bei der Herstellung der Rohrverbindungen zur Dose eine Schiefstellung einnehmen. Bei den bekannten, fest in der Dose angebrachten Verbindungselementen, nimmt das in der Dose zu montierende und mit den Verbindungselementen zu verbindende elektrische Installationsmaterial, sofern keine speziellen Maßnahmen eingeleitet werden, nach der Montage an der Wand ebenfalls eine Schiefstellung ein, was unzulänglich ist.

Bekannt sind einfache Einbaudosen (d.h. Dosen, in die nur ein elektrisches Bauteil, wie zum Beispiel eine Steckdose oder ein Schalter, montiert wird), bei denen dieses Problem gelöst wurde, indem im wesentlichen tangential zu einem gedachten Drehpunkt verlaufende Montageschlitze in einem Rahmen des zu montierenden elektrischen Bauteils angebracht werden. Bekannt sind Schrauben zur Befestigung des elektrischen Bauteils, die bei Verwendung der Montageschlitze eine Verschiebung, in diesem Falle eine Verdrehung, des elektrischen Bauteils gegenüber der Dose zulassen, so daß trotz einer möglicherweise schief eingebauten Dose eine angestrebte korrekte Einbaulage des elektrischen Bauteils an der Wand erzielt werden kann.

Bei Mehrfacheinbaudosen (d.h. Dosen, in die zwei oder mehrere elektrische Bauteile, wie zum Beispiel Steckdosen, Schalter, eine Kombination davon o.ä., montiert werden, unabhängig davon, ob sie als eine Baueinheit ausgeführt sind) stößt man beim Einsatz eines Rahmens mit Montageschlitzen für ein zu montierendes elektrisches Bauteil auf Nachteile: Die Schlitze können im Hinblick auf die angestrebten Korrekturmöglichkeiten in diesem Falle nicht parallel zu den Seitenwänden der Einbaudose liegen, sondern müssen in einem Winkel dazu verlaufen, weshalb in der Einbaudose mehr Platz erforderlich ist und die Konstruktion des elektrischen Bauteils größeren Beschränkungen unterliegt.

Ziel der Erfindung ist es, die Möglichkeiten zur Korrektur der Lage des elektrischen Bauteils gegenüber der Lage der Einbaudose wesentlich zu verbessern, unabhängig davon, ob es eine Einfach- oder Mehrfacheinbaudose betrifft, wobei die obenerwähnte Nachteile ausgeräumt sind.

Erfindungsgemäß ist die Kombination von Einbaudose und elektrischem Installationsmaterial dadurch gekennzeichnet, daß sich die Verbindungselemente der Dose im wesentlichen in einer parallel zum Boden verlaufenden Ebene zumindest entlang einer geraden oder gekrümmten Linie in einem spitzen oder rechten Winkel zur zugehörigen Seitenwand verschieben lassen, und daß die Schlitze in einem Winkel zur genannten Linie gerichtet sind. Wahlweise sind die Verbindungselemente der Dose ausgelegt, um im wesentlichen in einer parallel zum Boden verlaufenden Ebene an verschiedenen Stellen zumindest entlang einer geraden oder gekrümmten Linie in einem spitzen oder rechten Winkel zur zugehörigen Seitenwand Verbindungselemente vom Installationsmaterial aufzunehmen, wobei die Schlitze in einem Winkel zur genannten Linie gerichtet sind.

Bevorzugte Ausführungsformen sind in den abhängigen Patentansprüchen beschrieben.

Die Erfindung wird nachstehend anhand der beigefügten Zeichnungen näher erläutert. Dabei zeigt:
Fig. 1 eine Draufsicht eines Teils einer erfindungsgemäßen Einbaudose;
Fig. 2 einen Querschnitt der Einbaudose nach Fig. 1 entlang der Linie II-II;
Fig. 3 einen Querschnitt der Einbaudose nach Fig. 1 entlang der Linie III-III;
Fig. 4 eine Draufsicht einer in der Einbaudose nach Fig. 1 zu verwendenden Mutter;
Fig. 5 eine Seitenansicht der Mutter nach Fig. 4;
Fig. 5a und 5b schematische Darstellungen eines Draufsichts einer erfindungsgemäßen Doppeleinbaudose kombiniert mit einem oder zwei Rahmen von elektrischem Installationsmaterial in unterschiedlichen Lagen;
Fig. 6 eine perspektivische Darstellung eines Teils einer weiteren Ausführungsform einer erfindungsgemäßen Einbaudose;
Fig. 7 eine perspektivische Darstellung einer alternativen Ausführungsform einer Mutter für die Einbaudose nach Fig. 6;
Fig. 8 eine perspektivische Darstellung eines alternativen Elements für die Mutter nach Fig. 7;
Fig. 9 eine perspektivische Darstellung einer weiteren Ausführungsform eines Verbindungselements in einem Teil einer erfindungsgemäßen Einbaudose;
Fig. 10 eine perspektivische Darstellung einer weiteren Ausführungsform eines Verbindungselements in einem Teil einer erfindungsgemäßen Einbaudose;
Fig. 11 eine perspektivische Darstellung des in Fig. 10 verwendeten Verbindungselements;
Fig. 12 die Vorderansicht der Verbindung zwischen dem Verbindungselement nach Fig. 11 und einem Teil einer Schraube;
Fig. 13 die perspektivische Darstellung einer alternativen Ausführungsform des Verbindungselements nach Fig. 11;
Fig. 14 und 15 eine Drauf- bzw. Vorderansicht einer weiteren alternativen Ausführungsform eines Verbindungselements;
Fig. 16 die Vorderansicht der Verbindung zwischen dem Verbindungselement nach Fig. 14 und 15 und einem Teil einer Schraube;
Fig. 17 eine perspektivische Darstellung einer alternativen Ausführungsform des Verbindungselements nach Fig. 14;
Fig. 18 und 19 eine perspektivische Darstellung bzw. einen Querschnitt einer weiteren Ausführungsform eines Verbindungselements einer erfindungsgemäßen Einbaudose;
Fig. 20 den Querschnitt einer abgewandelten Form des Verbindungselements nach Fig. 18 und 19;
Fig. 21 eine perspektivische Darstellung einer weiteren Ausführungsform eines Verbindungselements in einem Teil einer erfindungsgemäßen Einbaudose;
Fig. 22 eine perspektivische Darstellung einer weiteren Ausführungsform eines Verbindungselementes in einem Teil einer erfindungsgemäßen Einbaudose;
Fig. 23 eine Draufsicht entlang Pfeil XXIII der Ausführungsform nach Fig. 22;
Fig. 24 und 25 zwei abgewandelte Formen einer weiteren Ausführungsform eines Verbindungselements in einem Teil einer erfindungsgemäßen Einbaudose;
Fig. 26 eine perspektivische und schematische Darstellung einer weiteren Ausführungsform eines Verbindungselements einer erfindungsgemäßen Verbindungsdose;
Fig. 27 (in perspektivischer Darstellung) und Fig. 28 (im Querschnitt entlang Linie XXVIII-XXVIII) eine weitere Ausführungsform eines Verbindungselements in einem Teil einer erfindungsgemäßen Verbindungsdose;
Fig. 29 in perspektivischer Darstellung eine weitere Ausführungsform von Verbindungselementen in einer zum Teil abgeschnittenen erfindungsgemäßen doppelten Einbaudose;
Fig. 30 in perspektivischer Darstellung eine andere Ausführungsform von Verbindungselementen für eine erfindungsgemäße doppelte Einbaudose;
Fig. 31 in perspektivischer Darstellung eine weitere Ausführungsform von Verbindungselementen für eine erfindungsgemäße doppelte Einbaudose; und
Fig. 32 in perspektivischer Darstellung einen Teil der Verbindungselemente nach Fig. 31 in einem Teil einer erfindungsgemäßen Einbaudose in einem größeren Maßstab.

In den einzelnen Figuren beziehen sich gleiche Bezugszahlen auf gleiche Teile oder auf Teile mit gleicher Funktion.

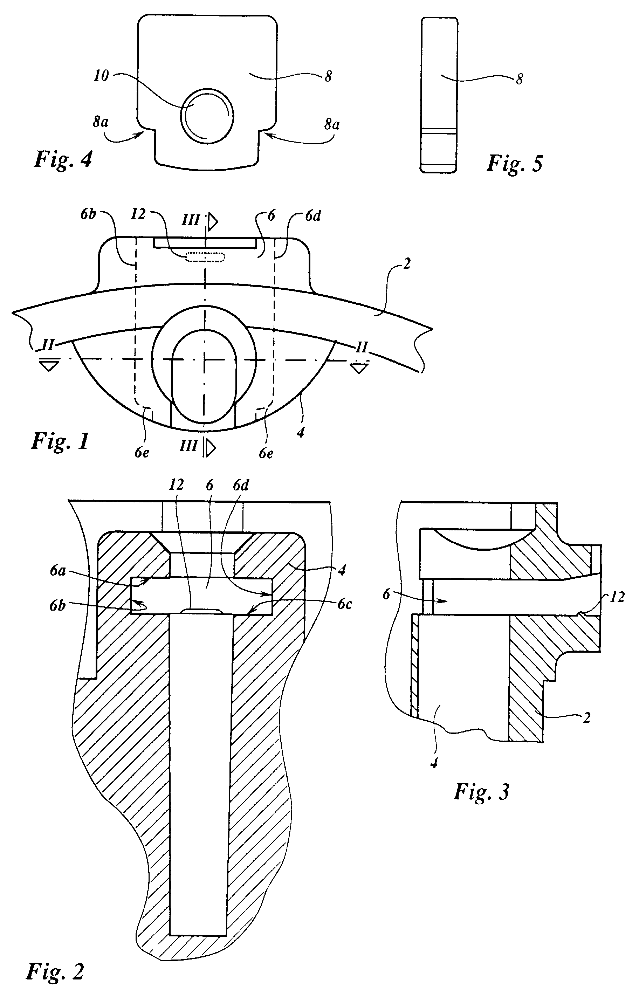

Fig. 1, 2 und 3 stellen einen Teil einer Seitenwand 2 einer nicht näher dargestellten einfachen oder mehrfachen Verbindungsdose dar. An der Innenseite von Seitenwand 2 ist eine hohle Säule 4 angebracht, wobei der Hohlraum einen ovalen Querschnitt hat. Die Säule 4 besitzt ferner einen Schlitz 6, in dem sich eine in den Fig. 4 und 5 dargestellte Mutter 8 mit einer Öffnung 10, die mit Gewinde versehen ist, schieben kann. Die Schubbewegung der Mutter 8 in Schlitz 6 wird durch die Führungsflächen 6a, 6b, 6c und 6d geführt und in einer Richtung durch einen Nocken 12 und in der entgegengesetzten Richtung durch zulaufende Wandteile 6e von Schlitz 6, gegen die die Seitenflächen 8a der Mutter 8 stoßen, begrenzt. Im Ergebnis der Schubbewegung kann sich die Öffnung 10 der Mutter 8 über den Querschnitt des ovalen Hohlraums in der Säule 4 bewegen. Ein mit der Mutter 8 zu verbindendes Verbindungselement vom Installationsmaterial in Form einer Schraube kann dank des Einsatzes der schiebenden Mutter 8 verschiedene, kontinuierlich wählbare Positionen gegenüber der Seitenwand 2 der Einbaudose einnehmen, weshalb, ungeachtet eines möglichen Schiefstandes der Einbaudose in einem Loch einer Wand, das Installationsmaterial korrekt ausgerichtet an der Wand montiert werden kann. Natürlich ist die Bahn der Mutter so zu wählen, daß sich das in der Einbaudose anzubringende Installationsmaterial in bezug auf die Einbaudose tatsächlich verschieben ggf. verdrehen läßt. Bei Einsatz von Installationsmaterial mit einem Rahmen, in dem nur runde Löcher für Schraubverbindungen vorgesehen sind, müssen alle Bahnen der einzelnen Muttern 8 im wesentlichen tangential zu einem gedachten Mittelpunkt der Einbaudose liegen. Sofern der Rahmen Montageschlitze besitzt, die nicht tangential zu einem gedachten Mittelpunkt des Installationsmaterials verlaufen, müssen die Bahnen der Muttern 8 in einem von Null verschiedenen Winkel zur Längsrichtung der zugehörigen Montageschlitze verlaufen, um eine Verschiebung ggf. Winkelverdrehung des Installations-materials gegenüber der Einbaudose zu ermöglichen.

Die Fig. 5a und 5b, die eine schematische Darstellung einer Doppeleinbaudose 1 mit einem Boden 1a und einer Seitenwand 2 in ununterbrochenen Linien zeigen, verdeutlichen das. Die Dose ist mit vier schiebenden Muttern versehen, jede Mutter in einer Aufstellung die in den Fig. 1-5 in weiteren Einzelheiten gezeigt ist. Die Bereiche in denen die Öffnungen 10 jeder Mutter gestellt werden können, sind in den Fig. 5a und 5b mit einem Oval in ununterbrochener Linie gezeigt. In unterbrochenen Linien ist einer Rahmen 3 angegeben, der in die Praxis zwei elektrische Elemente unterstützen wird. Es kann auch die Rede sein von zwei gesonderten Rahmen 3a und 3b, je versehen mit einem elektrischen Element. Der Rahmen 3 oder die Rahmen 3a und 3b ist/sind versehen mit Schlitzen 3c, die im wesentlichen rechtwinklig auf die mit ununterbrochenem Linie angedeuteten Bereichen gerichtet sind. Fig. 5a zeigt die Montagelage des Installationsmaterials in der Einbaudose, wenn die Einbaudose nicht schief in einer Wand eingebaut ist, während Fig. 5b eine Korrekturmöglichkeit der Lage des Installationsmaterial bei einer schief in der Wand eingebaute Einbaudose verdeutlicht bei Verwendung von Schrauben die durch die Schlitze 3c in den Öffnungen der Mutter geschraubt werden.

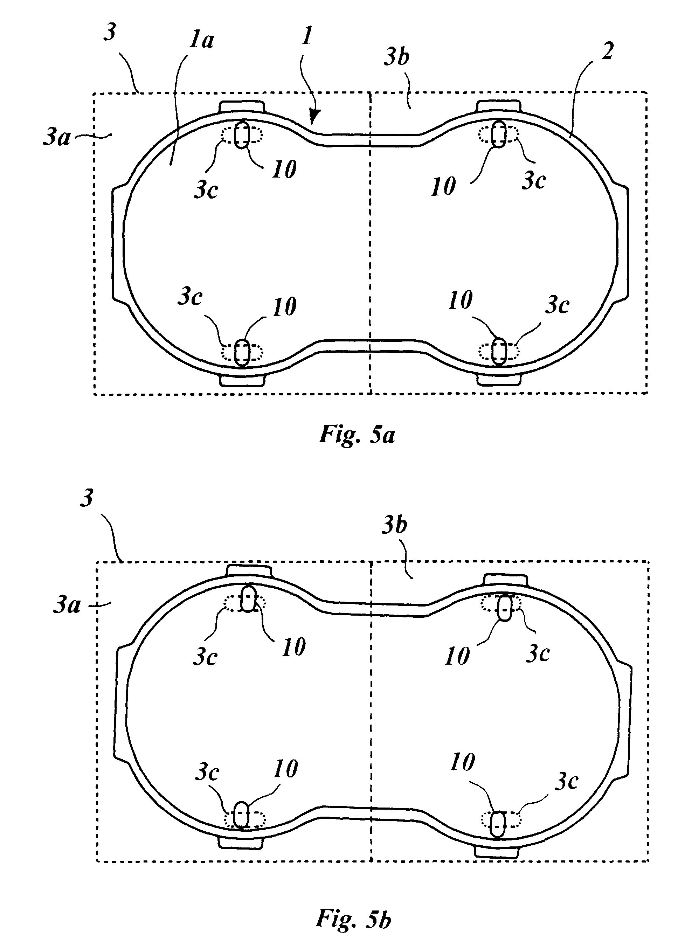

Fig. 6 stellt einen Teil einer Seitenwand 2 einer Einbaudose dar, wobei im Inneren eine Säule 14 vorgesehen ist, die sich bis zum Boden der Einbaudose erstreckt. Die Säule 14 ist an der mit der Bezugszahl 16 bezeichneten Stelle über einen vorbestimmten Abstand unterbrochen. Dieser Abstand ist ein wenig größer als die Dicke einer darin anzubringenden Mutter 18 mit einer Öffnung 20, die mit Gewinde versehen ist. In der Säule 14 befindet sich ein Loch 22 mit ovalem Querschnitt, wobei die Längsrichtung des Ovals in einem spitzen Winkel zur Seitenwand 2 verläuft. Die Öffnung 20 kann in der Unterbrechung 16 an verschiedenen Stellen mit Loch 22 in Deckung gebracht werden, weshalb eine Schraubverbindung zwischen dem Installationsmaterial und der Mutter 18 gegenüber der Seitenwand 2 der Einbaudose verschiebbar ist.

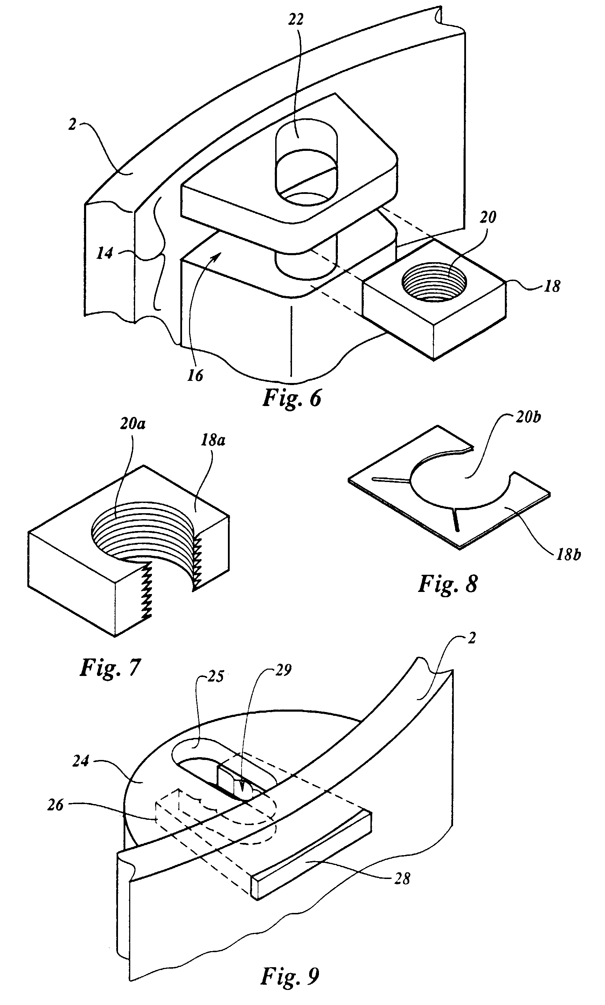

Fig. 7 zeigt in einem größeren Maßstab eine alternative Ausführungsform der Mutter 18 in Fig. 6: In Fig. 7 ist eine Mutter 18a mit einer Gewindeöffnung 20a im Vergleich zur Mutter 18 so gekürzt, daß das Gewinde an einer Stelle entlang dem Umfang unterbrochen ist. Unter Beibehaltung der Schubmöglichkeiten der Mutter in der Unterbrechung 16 läßt sich hiermit erreichen, daß die Mutter, ungeachtet der Montagelage der Mutter, nicht über die Begrenzungen der Unterbrechung 16 herausragt.

Wahlweise kann anstelle der Mutter 18a nach Fig. 7 eine Platte 18b nach Fig. 8 eingesetzt werden, wobei die Ränder der die Öffnung 20b begrenzenden Platte so geformt sind, daß sie einen Teil eines Schraubengangs bilden.

Fig. 9 stellt die Seitenwand 2 einer Einbaudose in einer ähnlichen konstruktiven Ausführung wie in Fig. 1-5 dar, wobei an der nach innen gewandten Seite eine mit einem ovalen Lochquerschnitt 25 versehene Säule 24 angebracht ist. Durch die Wand 2 und in der Säule 24 ist ein schlitzförmiger, von außen nach innen konisch zulaufender Schlitz 26 vorgesehen, in dem sich eine ebenfalls konisch zulaufende Platte 28 in der Längsrichtung des ovalen Querschnitts des Loches 25 von Säule 24 bewegen kann. Die Platte 28 besitzt eine längliche Aussparung, in der an der mit 29 bezeichneten Stelle Teile eines Schraubengangs geformt sind, die mit einer Schraube zur Befestigung von Installationsmaterial in der Einbaudose zusammenwirken können.

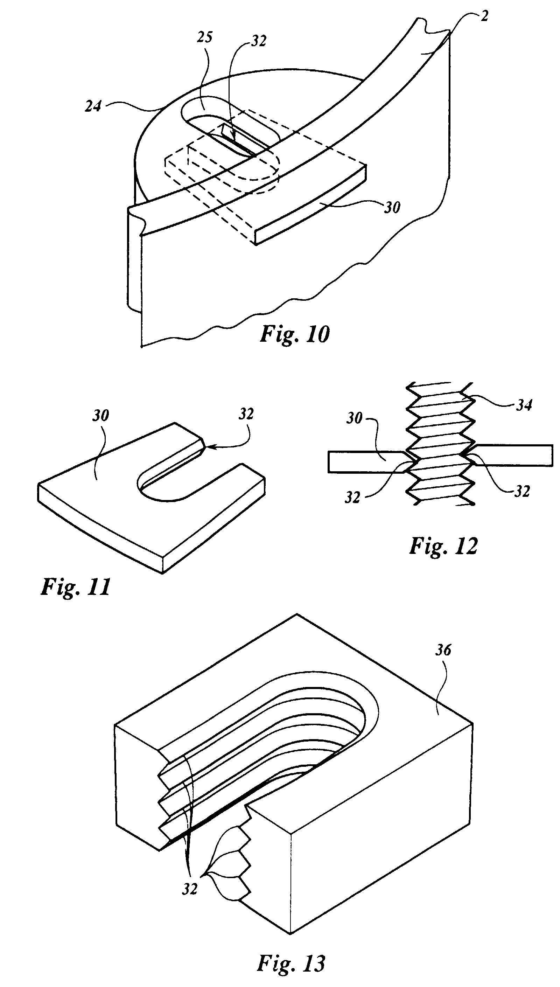

Fig. 10 zeigt eine Ausführungsform, die mit der nach Fig. 9 vergleichbar ist. Die in Fig. 10 montierte Platte 30 kann jedoch in der Seitenwand 2 und der Säule 24 fest angebracht sein. Die auch in Fig. 11 und 12 dargestellte Platte 30 ist mit einer länglichen Aussparung mit zwei parallelen Längsseiten versehen, die einen scharfen Rand besitzen. Wie in Fig. 12 näher dargestellt, sind die Ränder 32 so geformt, daß sie in das Gewinde einer zum Anbringen des Installationsmaterials in der Einbaudose verwendeten Schraube 34 greifen. Dank der parallelen Ränder 32 läßt sich die Schraube im ovalen Hohlraum 25 verschieben, wodurch eine Möglichkeit zur Korrektur der Lage des Installationsmaterials gegenüber der Lage der Einbaudose geschaffen wird.

Fig. 13 zeigt in einem anderen Maßstab eine Platte 36, die aus einer Zahl aufeinandergestapelter Platten 30 nach Fig. 10-12 besteht. Die Platte 36 schafft im Vergleich zu Platte 30 eine verbesserte Verbindung mit einer Schraube.

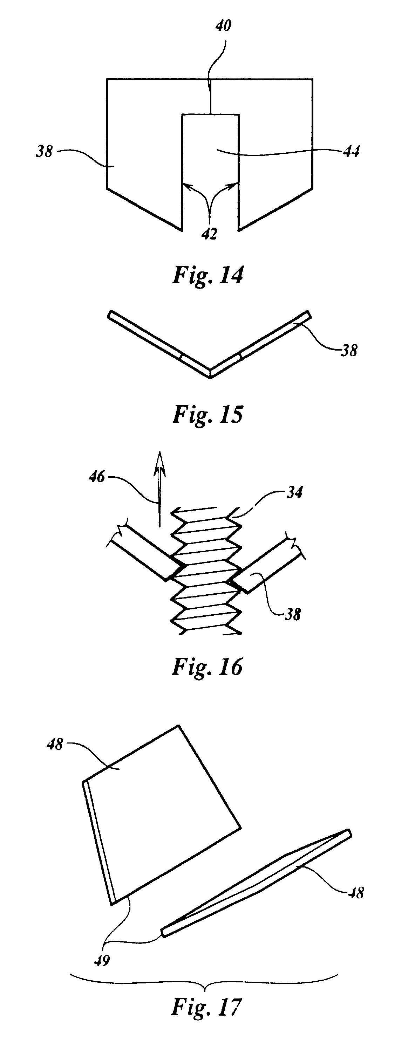

Fig.14-16 stellen eine alternative Ausführungsform der Platte 30 nach Fig. 10-12 dar: Die Platte 38 nach Fig. 14-16 ist entlang einer Linie 40 geknickt, weshalb parallele Ränder 42 einer länglichen Aussparung 44 in der Platte 38 gerade ausgeführt werden und dennoch gut in eine Schraube 34 greifen können (siehe Fig. 16). Ein weiterer Vorteil der Platte 38 besteht darin, daß sie in der Art eines Widerhakens das Herausziehen der Schraube 34 in der durch Pfeil 46 angegebenen Richtung (siehe Fig. 16) verhindert.

Fig. 17 zeigt eine Weiterentwicklung des in Fig. 14-16 enthaltenen Gedankens, wobei die in Fig. 17 dargestellten Platten 48 das zeigen, was von Platte 38 nach dem Entfernen des Zwischenstücks an der Stelle von Linie 40 zurückbleibt. Die Platten 48 nach Fig. 17 können auf analoge Weise wie Platte 30 in Fig. 10 in einem oder zwei Schlitz(en) der Seitenwand 2 und der Säule 24 einer Einbaudose befestigt werden, wobei sie entlang den einander zugewandten Rändern 49 auf die anhand von Fig. 14-16 erläuterte Weise wirken.

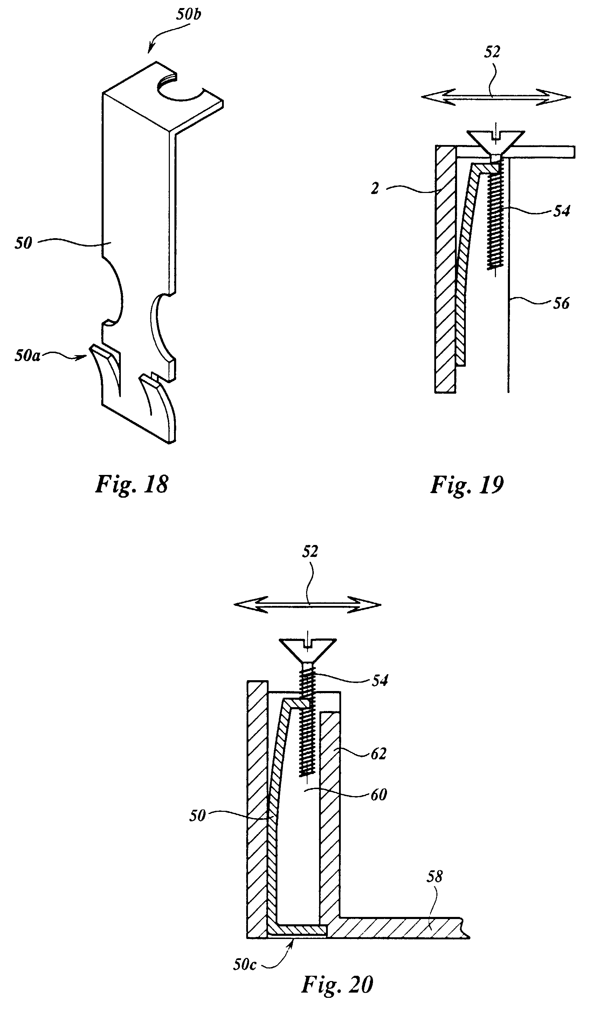

Fig. 18 und 19 stellen den Einsatz eines beweglichen Arms 50 dar, der in der Nähe eines Endes 50a mit der Seitenwand 2 einer Einbaudose verbunden wird und am anderen Ende 50b zum Teil mit Gewinde versehen ist. Wie in Fig. 19 durch den Doppelpfeil 52 angegeben, kann die Befestigungsstelle einer Schraube 54 am Ende 50b von Arm 50 in zwei entgegengesetzte Richtungen verschoben werden. Der Arm kann in einer nur schematisch dargestellten Säule 56 untergebracht sein.

Fig. 20 zeigt eine abgewandelte Form der Ausführungsform nach Fig. 18 und 19. In Fig. 20 wurde der Arm 50 vom Boden 58 einer Einbaudose aus in einen Hohlraum 60 einer Säule 62 geschoben, wobei das Ende 50c so geformt ist, daß es den Hohlraum 60 verschließt.

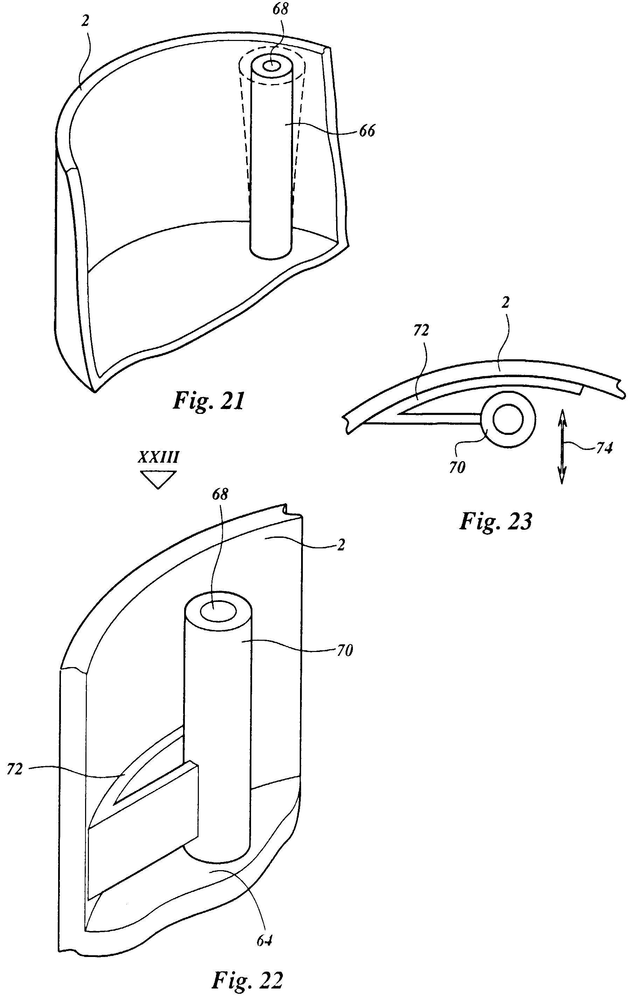

In Fig. 21 ist nahe der Seitenwand 2 einer Einbaudose am Boden 64 lose von der Seitenwand 2 eine bewegliche Säule 66 angebracht, die an dem vom Boden abgewandten Ende mit einer Öffnung 68 zur Aufnahme eines Verbindungselements vom Installationsmaterial versehen ist. Wie mit Strichlinien angedeutet, kann die Befestigungsstelle des Installationsmaterials an der Einbaudose dank der Flexibilität der Säule 66 in verschiedene Richtungen verlegt werden.

In Fig. 22 und 23 ist eine getrennte, nicht mit dem Boden 64 der Einbaudose verbundene Säule 70 mittels Blattfeder 72 mit der Wand 2 einer Einbaudose verbunden. Wie aus Fig. 23 ersichtlich, läßt eine derartige Anordnung eine Bewegung der Säule 70 in die mit einem Doppelpfeil 74 angegebenen Richtungen zu.

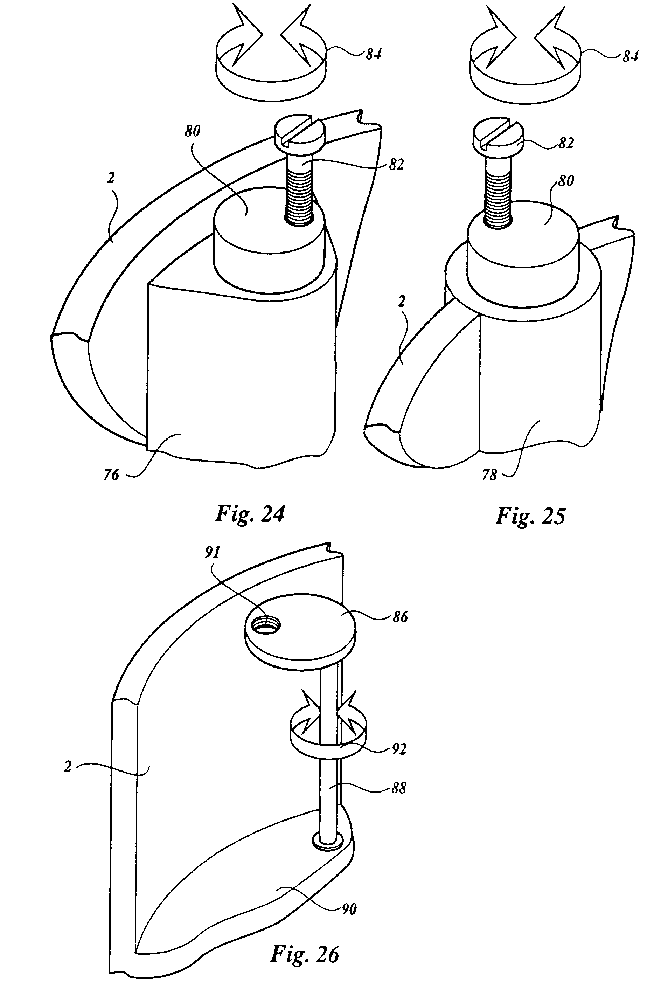

In Fig. 24 und 25 ist in einer Säule 76 bzw. 78 ein zylinderförmiges Element 80 drehbar und gegen Herausziehen geschützt befestigt, wobei das zylinderförmige Element 80 exzentrisch mit einem Gewindeloch versehen ist, in das eine mit Installationsmaterial verbundene Schraube 82 eingeschraubt werden kann. Wie anhand der Pfeile 84 zu erkennen, verändert sich die Lage des Gewindelochs im zylinderförmigen Element 80 gegenüber der Seitenwand 2 der Einbaudose durch Verdrehen des zylinderförmigen Elements 80, wodurch eine Möglichkeit zur Korrektur der Lage des Installationsmaterials gegenüber der Lage der Einbaudose besteht.

Fig. 26 stellt eine abgewandelte Form des anhand von Fig. 24 und 25 erläuterten Prinzips dar, wobei eine Platte 86 an einem Ende eines verdrillbaren Arms 88 angebracht ist, dessen anderes Ende am Boden 90 einer Einbaudose befestigt ist. Die Platte 86 besitzt entfernt von der Befestigungsstelle am Arm 88 eine Öffnung 91 mit Gewinde. Wie der Doppelpfeil 92 andeutet, kann sich die Platte 86 um den Arm 88 drehen, wobei sich der Arm 88 verdrillt und eine Verschiebung der Öffnung 91 gegenüber der Seitenwand 2 der Einbaudose auftritt. Der Arm 88 und die Platte 86 können in dem Hohlraum einer nicht dargestellten Säule untergebracht sein.

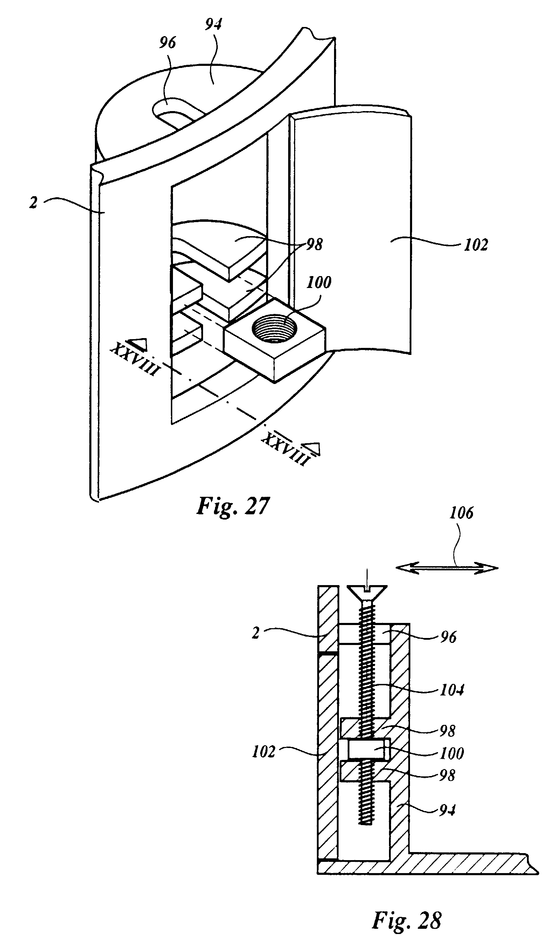

Fig. 27 zeigt einen Teil der Seitenwand 2 einer Einbaudose, wobei sich im Inneren der Dose eine hohle Säule 94 befindet, die an dem vom Boden der Einbaudose abgewandten Ende mit einer Öffnung 96 mit einem ovalen Querschnitt versehen ist. Im Hohlraum der Säule 94 sind zwei im wesentlichen U-förmige Anschläge 98 übereinander angebracht, zwischen die eine Mutter 100 angeordnet werden kann. Eine in der Seitenwand 2 vorgesehene Klappe 102 kann den Hohlraum in der Säule 94 verschließen und die Mutter 100 zwischen den Anschlägen 98 einschließen. Wie in Fig. 28 zu erkennen, kann über die Öffnung 96 eine Schraube 104 in die Mutter 100 geschraubt werden, wobei die Mutter 100 zwischen den Anschlägen 98 als Gelenkpunkt für die Schraube 104 fungiert. Somit läßt sich das vom Boden der Einbaudose abgewandte Ende der Schraube 104 in die Richtungen des Doppelpfeils 106 verschieben, womit erneut eine Möglichkeit zur Korrektur der Lage des mit der Schraube 104 verbundenen Installationsmaterials gegenüber der Lage der Einbaudose geschaffen wird.

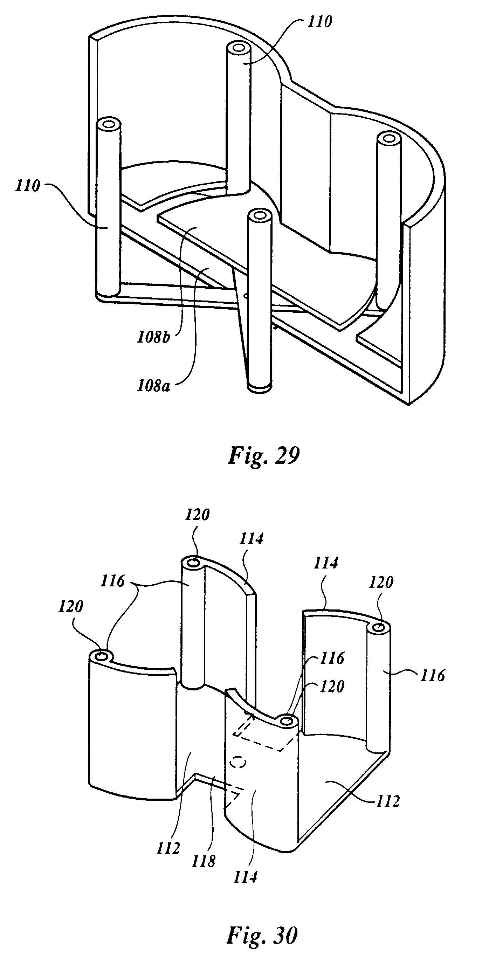

Fig. 29 stellt eine doppelte Einbaudose mit einem doppelten Boden 108a, 108b dar. Die Einbaudose verfügt über zwei U-förmige kombinierte Verbindungselemente 110, die an der Stelle, wo sie sich im doppelten Boden 108a, 108b kreuzen, gelenkig miteinander verbunden sind. Eine Gelenkverbindung ist im übrigen nicht wesentlich. Die Verbindungselemente 110 können auch getrennt voneinander oder sogar parallel zueinander angeordnet sein. Die aufwärts gerichteten Schenkel der Verbindungselemente 110 besitzen an den freien Enden Öffnungen, die beispielsweise mit Gewinde versehen sein können. Die Verbindungselemente 110 können sich in Rillen des Bodenteils 108b bewegen.

Fig. 30 zeigt ein Verbindungselement, das für den Einsatz in einer doppelten Einbaudose bestimmt ist und aus einem Satz Grundplatten 112 besteht, an denen jeweils ein Satz Seitenplatten 114 mit Säulen 116 angebracht ist. Die Grundplatten 112 sind untereinander über eine Brücke 118 verbunden, die mit dem Boden einer doppelten Einbaudose gelenkig verbunden werden kann, wobei die Formgebung der Seitenwand mit der der Einbaudose nach Fig. 29 übereinstimmt. Die Säulen 116 besitzen Löcher 120 für Verbindungselemente vom Installationsmaterial. Nach der Montage des in Fig. 30 dargestellten Satzes in einer doppelten Einbaudose kann sich der Satz bei einer entsprechend gewählten Dimensionierung um die Brücke 118 in bezug auf die Dose drehen, um so Möglichkeiten zur Korrektur der Lage des Installationsmaterials gegenüber der Lage der Einbaudose zu schaffen.

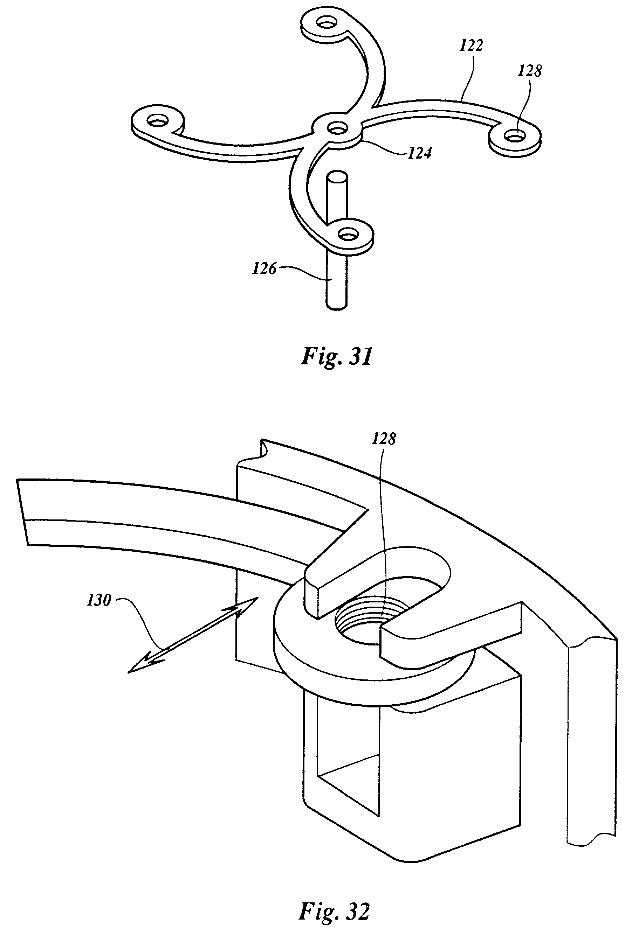

Der Satz nach Fig. 30 kann in stark vereinfachter Form so ausgeführt werden, wie in Fig. 31 dargestellt. Fig. 31 zeigt ein kombiniertes, im wesentlichen X-förmiges Vierfachverbindungselement 122, dessen mittlerer Teil 124 gelenkig mit einer in der Mitte einer doppelten Einbaudose montierten Säule 126 verbunden werden kann. Das Verbindungselement 122 besitzt an den Enden der vier Schenkel Löcher 128, die eventuell mit Gewinde versehen sein können.

Wie in Fig. 32 dargestellt, kann ein Ende eines Schenkels des Verbindungselements 122 in einen Schlitz eingeführt werden, der im Inneren der doppelten Einbaudose durch eine Unterbrechung in einer an der Wand befestigten Säule geformt wird. Das mit dem Loch 128 versehene Ende des Verbindungselements 122 kann sich in der Unterbrechung in die Richtungen des Doppelpfeils 130 bewegen. Dabei bleibt in der Säule an beiden Seiten der Öffnung 128 ausreichend Platz, so daß sich eine in der Öffnung 128 angebrachte Schraube über einen vorbestimmten Abstand mitbewegen kann.

Natürlich können die Verbindungselemente und die damit zusammenhängenden Dosenkonstruktionen nach Fig. 29-32 im Prinzip auch für eine einfache Einbaudose verwendet werden.

Vorstehend war häufig von einem Verbindungselement der Dose die Rede, das (möglicherweise zum Teil) eine mit Gewinde versehene Öffnung besitzt. Eine Verbindung mittels Gewinde ist jedoch für die vorliegende Erfindung nicht wesentlich. Es können auch einrastende Verbindungen o.ä. zwischen den Verbindungselementen der Dose und den Verbindungselementen vom Installationsmaterial zum Einsatz gelangen.

## Patentansprüche

1. Kombination von:
elektrisches Installationsmaterial mit einem Rahmen mit einer Anzahl von Schlitzen; und
eine Einbaudose für elektrisches Installationsmaterial, mit:
einem Boden und einer oder mehreren Seitenwänden sowie
einer Anzahl von jeweils nahe einer der Seitenwände montierten Verbindungselementen zur Befestigung des Installationsmaterials in der Dose, wobei die Verbindungselemente ausgelegt sind, um damit im wesentlichen komplementär geformte Verbindungselemente vom Installationsmaterial durch die Schlitze zu verbinden, dadurch gekennzeichnet, daß die Verbindungselemente der Dose im wesentlichen in einer parallel zum Boden verlaufenden Ebene zumindest entlang einer geraden oder gekrümmten Linie in einem spitzen oder rechten Winkel zur zugehörigen Seitenwand (2) bewegbar sind, und daß die Schlitzen in einem Winkel zur vorgenannten Linie gerichtet sind.

2. Kombination von:
elektrisches Installationsmaterial mit einem Rahmen mit einer Anzahl von Schlitzen; und
eine Einbaudose für elektrisches Installationsmaterial, mit:
einem Boden und einer oder mehreren Seitenwänden sowie
einer Anzahl von jeweils nahe einer der Seitenwände montierten Verbindungselementen zur Befestigung des Installationsmaterials in der Dose, wobei die Verbindungselemente ausgelegt sind, um damit im wesentlichen komplementär geformte Verbindungselemente vom Installationsmaterial durch die Schlitze zu verbinden, dadurch gekennzeichnet, daß die Verbindungselemente der Dose ausgelegt sind, um im wesentlichen in einer parallel zum Boden verlaufenden Ebene an verschiedenen Stellen zumindest entlang einer geraden oder gekrümmten Linie in einem spitzen oder rechten Winkel zur zugehörigen Seitenwand (2) Verbindungselemente vom Installationsmaterial aufzunehmen, und daß die Schlitze in einem Winkel zur vorgenannten Linie gerichtet sind.

3. Kombination nach Anspruch 1, dadurch gekennzeichnet, daß die Seitenwand (2) der Dose zumindest an der dem Doseninneren zugewandten Seite mit einem oder mehreren zusammenwirkenden Führungsteil(en) zur Unterstützung eines entlang einer Führungsfläche (6a, 6b, 6c, 6d) eines jeden Führungsteils verschiebbaren Verbindungselements (8; 18; 18a; 18b; 122) versehen ist.

4. Kombination nach Anspruch 3, dadurch gekennzeichnet, daß das Verbindungselement aus einem im wesentlichen plattenförmigen Element (8; 18; 18a; 18b; 28) mit einer Öffnung (10; 20; 20a; 20b; 29) besteht, die ganz oder zum Teil mit Gewinde versehen ist.

5. Kombination nach Anspruch 1, dadurch gekennzeichnet, daß die Seitenwand mit einem oder mehreren zusammen-wirkenden Anschlägen (98) zur Unterstützung eines zwischen den Anschlägen schwenkbaren Verbindungselements (100) versehen ist.

6. Kombination nach Anspruch 1, dadurch gekennzeichnet, daß das Verbindungselement der Dose einen länglichen, flexibelen Arm (50; 66; 70; 88) besitzt, der in der Nähe eines Endes an der Seitenwand oder am Boden (58; 64; 90) der Einbaudose befestigt ist, wobei das andere Ende so ausgelegt ist, daß damit ein im wesentlichen komplementär geformtes Verbindungselement des Installationsmaterials (54) verbunden werden kann.

7. Kombination nach Anspruch 6, dadurch gekennzeichnet, daß die Befestigung des Arms (70) eine Blattfeder (72) umfaßt.

8. Kombination nach Anspruch 1, dadurch gekennzeichnet, daß das Verbindungselement (80) der Dose im wesentlichen zylinderförmig ist und in einer sich vom Boden entlang der Seitenwand erstreckenden Säule (76; 78) um die Mittelachse drehbar angebracht ist, wobei das zum Verbindungselement vom Installationsmaterial (82) gewandte Ende des Verbindungselements (80) der Dose exzentrisch mit Mitteln zur Verbindung mit einem im wesentlichen komplementär geformten Verbindungselement vom Installationsmaterial (82) versehen ist.

9. Kombination nach Anspruch 1, dadurch gekennzeichnet, daß zumindest zwei der Verbindungselemente der Dose durch parallele Schenkel eines mit dem Boden der Dose verbundenen, im wesentlichen U-förmigen Elements (110; 112; 114; 116) geformt werden, das an beiden Enden zur Verbindung mit im wesentlichen komplementär geformten Verbindungselementen vom Installationsmaterial ausgelegt ist.

10. Kombination nach Anspruch 1, dadurch gekennzeichnet, daß zumindest zwei der Verbindungselemente der Dose durch sich entlang der Seitenwand der Dose erstreckende, miteinander verbundene Schenkel (122) geformt werden, deren Enden zur Verbindung mit im wesentlichen komplementär geformten Verbindungselementen vom Installationsmaterial ausgelegt sind.

11. Kombination nach Anspruch 10, dadurch gekennzeichnet, daß die Schenkel (122) mit dem Boden der Dose verbunden sind.

12. Kombination nach Anspruch 2, dadurch gekennzeichnet, daß das Verbindungselement zumindest aus einem im wesentlichen plattenförmigen Element (30; 36; 38; 48) besteht, wobei zwei einander zugewandte, parallele Ränder (32; 42; 49) einen Schlitz (44) begrenzen.

13. Kombination nach einem der Ansprüche 1-12, dadurch gekennzeichnet, daß die Verbindungselemente von zumindest einem Teil mit einem oder mehreren Schraubengängen versehen sind, die dazu dienen, mit mit Gewinde versehenen Verbindungselementen vom Installationsmaterial zusammenzuwirken.

14. Kombination nach einem der Ansprüche 1-13, dadurch gekennzeichnet, daß die Schlitzen im Rahmen des Installationsmaterials gerade oder gekrümmt sind.

15. Kombination nach einem der Ansprüche 1-14, dadurch gekennzeichnet, daß die Schlitzen im Rahmen im wesentlichen parallel zur zugehörigen Seitenwand der Dose laufen.

16. Kombination nach Anspruch 1 oder 2, dadurch gekennzeichnet, daß die Richtung der vorgenannten Linie im wesentlichen rechtwinklig zur Schlitzrichtung ist.

17. Einbaudose bestimmt für Benutzung in einer Kombination nach einem der Ansprüche 1-16.

18. Einbaudose nach Anspruch 17, dadurch gekennzeichnet, daß die Dose für das Aufnehmen von zwei oder mehr elektrischen Einheiten bestimmt ist.
